# EUROPÄISCHE PATENTSCHRIFT

(11) **EP 0 564 851 B1**
(45) Veröffentlichungstag und Bekanntmachung des Hinweises auf die Patenterteilung: **17.07.1996**
(21) Anmeldenummer: 93104190.9
(22) Anmeldetag: 15.03.1993
(51) Int. Cl.: B65G 69/18, B65G 67/06

(54) **Vorrichtung zum Verladen von Schüttgut**
Device for loading granulate
Dispositif pour le chargement de matières en vrac

(30) Priorität: 08.04.1992 DE 4211855
(43) Veröffentlichungstag der Anmeldung: 13.10.1993
(73) Patentinhaber: CLAUDIUS PETERS AKTIENGESELLSCHAFT, D-21614 Buxtehude (DE)
(72) Erfinder: Buchfink, Adolf, Dipl.-Ing., W-2107 Rosengarten-Klecken (DE)
(74) Vertreter: Glawe, Delfs, Moll & Partner

(56) Entgegenhaltungen:
- EP-A- 0 141 052
- DE-A- 2 821 211
- FR-A- 2 338 208
- US-A- 4 065 005

## Beschreibung

Da es schwierig ist, ein Transportfahrzeug zum Beladen mit Schüttgut so zu manövrieren, daß sich sein Füllstutzen genau unter dem Abfüllorgan befindet, wird das Abfüllorgan horizontal beweglich ausgeführt, damit es auf die unterschiedliche Position des Füllstutzens eingestellt werden kann. Das bedeutet, daß in der Verladevorrichtung eine bewegliche Verbindung zwischen dem Abfüllorgan und der stationären Quelle - beispielsweise einem Siloauslaß - vorgesehen werden muß. Dafür haben sich verfahrbare Verladetrichter bewährt, die am unteren, engen Ende das Abfüllorgan tragen und deren oberen Öffnung, der das Gut von der stationären Quelle zugeführt wird, eine der Verfahrstrecke entsprechende Weite hat.

Wenn ein Siloauslaß unmittelbar über dem Verladetrichter angeordnet ist (DE-B-1219392) hat der Trichter in seiner Verfahrrichtung eine Länge, die mindestens seiner maximalen Verfahrstrecke gleicht. In den Extrempositionen erstreckt er sich vom Siloauslaß über diese ganze Länge, obwohl seine Förderreichweite nur die halbe Länge beträgt. Der Platzbedarf ist daher im Verhältnis zur Reichweite groß.

Einen geringeren Platzbedarf in der Verfahrrichtung des Trichters erreicht man bei einer anderen bekannten Vorrichtung (DE-A-2 821 211), die bei der Bildung des Oberbegriffs des Anspruchs 1 zugrundegelegt wurde. Dort wird das Gut dem Verladetrichter von einer seitlich des Verfahrweges des Verladetrichters gelegenen Quelle her mittels eines Förderrohrs zugeführt. Damit das am Verladetrichter mündende Ende des Förderrohrs der Bewegung des Verladetrichters folgen kann, ist sein anderes Ende schwenkbar gelagert. Bei der Bewegung des Verladetrichters beschreibt das trichterseitige Ende des Rohrs eine Kreisbewegung und bewegt sich im Verhältnis zum Verladetrichter quer zu dessen Verfahrrichtung. Dessen Haupterstreckung liegt deshalb quer zur Verfahrrichtung. Zum Schutz gegen Staubaustritt ist er durch eine verschiebliche Platte abgedeckt, die eine Öffnung zur Durchführung des Förderrohres aufweist. In den jeweiligen Endstellungen des Trichters ragt diese Platte seitlich über den Trichter zur einen Seite, in der Mittenstellung des Trichters zur anderen Seite hinaus. Wegen des dadurch verursachten, großen seitlichen Raumbedarfs, ist die parallele Anordnung von mehreren solchen Verladevorrichtungen in geringem Abstand voneinander nicht möglich.

Der vorliegenden Erfindung liegt die Aufgabe zugrunde, eine Vorrichtung der im Oberbegriff des Anspruchs 1 genannten Art zu schaffen, die die genannten Nachteile nicht oder in geringerem Maße aufweist, die insbesondere weniger Platz benötigt, kostengünstig herzustellen ist und Möglichkeiten für das Ergreifen von wirkungsvollen Entstaubungsmaßnahmen bietet.

Die Erfindung löst diese Aufgabe dadurch, daß der Deckel gegenüber dem Verladetrichter um eine im Trichter stehende, gedachte Achse drehbar ist und die das Auslaßende des Förderrohrs aufnehmende Öffnung exzentrisch im Deckel angeordnet ist.

Der Begriff "Verladetrichter" soll alle zur Weiterleitung des Schüttguts aus dem Förderrohr in die Einfüllöffnungen des Transportbehälters geeigneten Einrichtungen umfassen, die eine weite oberseitige Öffnung und eine engere Auslaßöffnung aufweisen.

Der Begriff "stationäre Quelle" ist so zu verstehen, daß diese Quelle keine von der Verfahrbewegung des Verladetrichters abhängige Eigenbewegung durchführen kann.

Der Begriff "Förderrohr" soll jegliches Förderorgan umfassen, das zur Förderung des Guts von der stationären Quelle zum Verladetrichter geeignet ist und eine im wesentlichen unveränderbare Länge hat. Dazu zählen pneumatische Förderrinnen ebenso wie Schneckenförderer.

Grundlage der Erfindung ist die Erkenntnis, daß das beim Verfahren des Verladetrichters einen Kreisbogen beschreibende Auslaßende des Förderrohrs nicht unbedingt eine lineare Querbewegung bezüglich des Verladetrichters beschreiben muß, sondern bezüglich dieses Trichters auch eine Kreisbogenbewegung um eine im Trichter stehende Achse ausführen kann (Kurbeltriebprinzip). Diese Drehachse muß dabei nicht unbedingt physikalisch vorhanden sein, die drehbare Lagerung des Deckels kann auch radial beabstandet von ihr vorgesehen sein. Die im Deckel des Trichters angeordnete Öffnung zur Aufnahme des Auslaßendes des Förderrohrs ist radial von dessen Drehachse beabstandet. Diese Exzentrizität muß mindestens halb so groß sein, wie der unterschied zwischen dem größten und dem kleinsten Abstand der möglichen Positionen des Verladetrichters längs der Verfahrstrecke von dem Förderrohrschwenkpunkt.

Die Horizontalabmessung der erfindungsgemäßen Vorrichtung in Verfahrrichtung des Trichters ist, abhängig von den Trichterabmessungen, nur wenig größer als der maximale Verfahrweg. Der Platzbedarf quer zur Verfahrrichtung ist ebenfalls sehr gering, da der Deckel aufgrund seiner Drehbewegung sich nicht seitlich über den Trichterrand hinaus verschiebt.

Um Staubaustritt zu vermeiden, ist ein dichter Anschluß des Deckels an den Rand des Verladetrichters erforderlich. Dieser läßt sich leichter verwirklichen, wenn der Deckel sowie der obere Rand des Verladetrichters kreisförmig ausgebildet sind. Zur Abdichtung zwischen dem oberen Trichterrand und dem Deckelrand kann gewünschtenfalls eine die Drehbewegung des Deckels erlaubende Gleitdichtung vorgesehen werden.

Es ist vorteilhaft, wenn der Verladetrichter rotationssymmetrisch ist und sich in Zufuhrrichtung des Schüttguts konisch verjüngt. Der Deckel wird am Verladetrichter so angeordnet, daß seine Drehachse der Symmetrieachse entspricht. Auf diese Weise sind die Zu- und Ablaufbedingungen für das Schüttgut im Verladetrichter unabhängig von dessen Verfahrzustand, da sich der Abstand zwischen Auslauföffnung des Förderrohrs und Auslauföffnung des Trichters nicht ändert.

Vorteilhafterweise ist der Deckel auf einem zentrisch am Verladetrichter angeordneten Lager drehbar gelagert. Dieses Lager nimmt dann die bei der Fahrbewegung des Trichters auftretenden Radialkräfte auf. Ferner bewirkt es, daß der Anpreßdruck des Deckels auf die Dichtung des Trichterrands einstellbar und auch während eines Verfahrvorganges gleichbleibend ist. Dadurch werden Staubaustritt sowie vorzeitiger Verschleiß der Dichtung vermieden.

Es ist zweckmäßig, im Bereich des das Schüttgut aufnehmenden Endes des Förderrohrs zusätzlich einen Entstaubungsstutzen vorzusehen, über den die Staubluft aus der Vorrichtung abgesaugt wird.

Häufig ist es erwünscht, auch aus dem zu beladenen Behälter die Staubluft abzusaugen. Zu diesem Zweck ist vorteilhafterweise eine Staubrückführungsleitung vorgesehen, deren trichterseitiges Ende in einen Bereich des Verladetrichters mündet, der während des Verfahrvorganges nicht vom Förderrohr überfahren wird. Ein solcher Bereich ist vorhanden, da die Mündung des Förderrohrs während der Verfahrbewegung des Trichters bezüglich desselben nicht einen vollständigen Kreis, sondern nur einen Kreisbogen beschreibt. Dadurch wird über den gesamten Verfahrweg des Trichters eine räumliche Trennung zwischen dem einströmenden Schüttgut und der in dem Trichter rückströmenden Staubluft erreicht. Durch den sich in Fließrichtung der Staubluft konisch erweiterten Trichter wird eine zusätzliche Staubabscheidung erreicht, so daß sich die Entstaubungsleistung der Vorrichtung weiter verbessert.

In diesem Zusammenhang ist es vorteilhaft, wenn das Förderrohr in dem Bereich, in dem es in den Verladetrichter mündet, zusätzlich ein inneres Rohr aufweist, in dem das Schüttgut zugeführt wird, wobei der Ringraum zwischen innerem Rohr und Förderrohr für das Abströmen der Staubluft vorgesehen ist. Die Staubluft kann dann ohne Behinderung durch das einströmende Schüttgut abströmen. Sie strömt durch das Förderrohr im Gegenstrom zum einfließenden Schüttgut zum Entstaubungsstutzen im Bereich des Materialeinlaufs. In der gesamten Vorrichtung herrscht dann ein gegenüber dem Umgebungsdruck verminderter Druck, so daß selbst bei gegebenenfalls noch vorhandenen geringfügigen Undichtigkeiten ein Staubaustritt vermieden wird.

Der Antrieb zum Verfahren des Trichters kann an dem Trichter, an dem Förderrohr oder an sonstigen geeigneten Elementen der Vorrichtung angreifen.

Wenn zusätzlich noch eine Querverschiebbarkeit der in den Transportbehälter mündenden Auslauföffnung erforderlich ist, ist es zweckmäßig, unterhalb des Verladetrichters einen zweiten Verladetrichter anzuordnen, in den der erste Verladetrichter mündet und der quer zur Verfahrrichtung des ersten Verladetrichters verschiebbar ist. Da aber die erfindungsgemäße kinematische Verbindung zwischen dem Verladetrichter, dessen Deckel und dem Förderrohr unempfindlich gegenüber seitlicher Bewegung des Verladetrichters ist, kann auch dieser selbst zusätzlich zu seiner Verfahrbarkeit in einer Hauptrichtung auch quer verschiebbar sein.

Ein Ausführungsbeispiel der Erfindung wird im folgenden anhand der Zeichnung beschrieben. Darin zeigen:
- Fig. 1: eine schematische Ansicht der Vorrichtung von oben,
- Fig. 2: eine Schnittansicht der Vorrichtung in einer senkrecht zur Verfahrrichtung des Trichters liegenden Ebene,
- Fig. 3: einen detaillierteren Ausschnitt aus Fig. 2, in dem der Verladetrichter gezeigt ist,
- Fig. 4: den gleichen Ausschnitt mit einem zusätzlichen zweiten Verladetrichter, der quer zur Verfahrrichtung des ersten Verladetrichters verschiebbar ist.

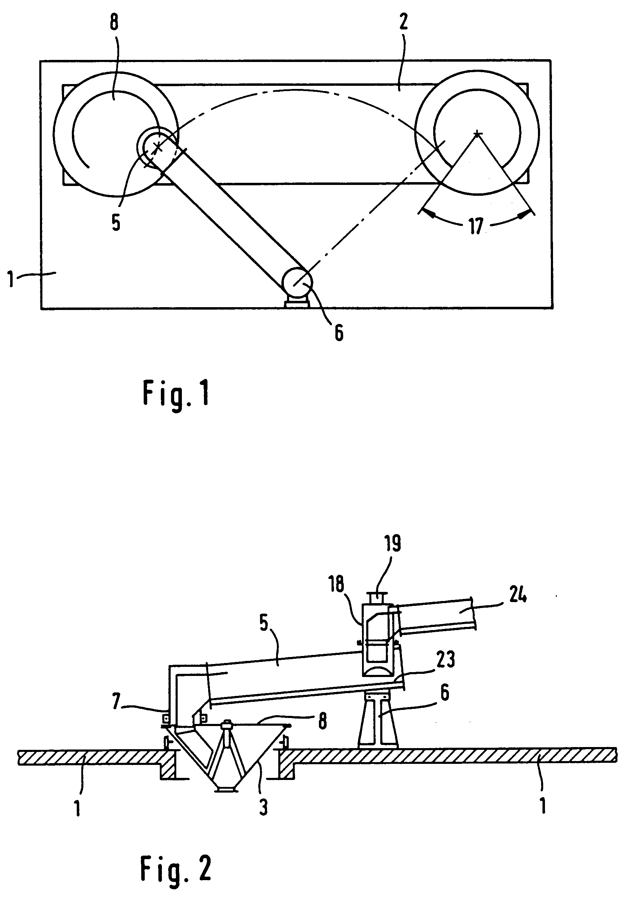

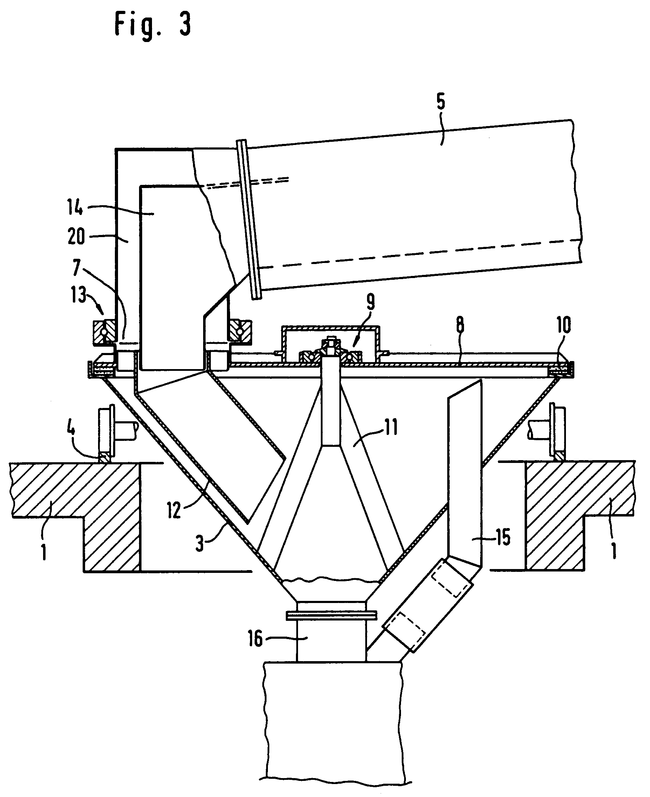

Die Vorrichtung ist auf einer horizontalen Grundplatte 1 angeordnet, die beispielsweise Bestandteil eines Silos sein kann. Die Platte 1 weist einen rechteckigen Ausschnitt 2 auf, durch den der Verladetrichter 3 hindurchragt. Der Trichter 3 ist parallel zur langen Seite des rechteckigen Ausschnitts auf Schienen 4 verschiebbar (siehe Fig. 3). Der Antrieb zum Verschieben des Trichters ist in der Zeichnung nicht dargestellt. Unterhalb des Trichters 3 und parallel zu dessen Verfahrrichtung verläuft der nicht dargestellte Fahrweg, auf dem die ebenfalls nicht dargestellten, zu befüllenden Transportbehälter bereitgestellt werden. Das Förderrohr 5 ist auf einem Lagerbock 6 schwenkbar befestigt. Mit seinem trichterseitigen Ende 7 schließt es mit dem Deckel 8 ab. Der kreisförmige Deckel 8 ist auf einem Lager 9 drehbar gelagert. Sein Außenrand schließt mittels einer Gleitdichtung 10 dichtend mit der Oberkante des Verladetrichters 3 ab. Die am Lager 9 angreifenden Kräfte werden über Streben 11 auf den Trichterboden übertragen. Von dem Deckel 8 ragt ein an diesem befestigter Rohrstutzen 12 schräg nach unten in den Verladetrichter 3 hinein. Der Deckel 8 weist ferner ein Lager 13 zur drehbaren Lagerung des Auslaßendes 7 des Förderrohres 5 auf. In diesem Ende 7 ist ein inneres Rohr 14 angeordnet, das in den Rohrstutzen 12 mündet. Im Bereich der Trichtermündung 16 ist eine Staubrückführungsleitung 15 angeordnet, die Staubluft aus dem zu befüllenden Behälter in den Trichter 3 zurückführt. Sie ist in der Fig. 2 aus Gründen der Übersichtlichkeit nicht dargestellt.

Das Förderrohr ist als geschlossene pneumatische Förderrinne dargestellt. Stattdessen kann beispielsweise auch ein Schneckenförderer verwendet werden, der den Vorteil hat, daß Fördergefälle nicht erforderlich ist und daher Bauhöhe gespart wird und daß darin schon eine Vorentlüftung stattfindet. Letzteres ist vor allem bei Stoffen mit hohem Lufthaltevermögen vorteilhaft.

Beim Verfahren des Trichters 3 führt das Förderrohr 5 um die Achse seines Lagerbocks 6 eine Schwenkbewegung aus. Sein Auslaßende 7 beschreibt dabei bezüglich der Grundplatte 1 einen weiten Kreisbogen, dessen Mittelpunkt die Achse des Lagerbocks 6 ist und bezüglich des Verladetrichters 3 einen engeren Kreisbogen, dessen Mittelpunkt das Lager 9 des Deckel 8 ist. Ein bestimmtes Segment 17 des Trichters 3 (siehe Fig. 1) wird dabei von dem Rohrende 7 nicht überstrichen. In diesem Segment ist das trichterseitige Ende der Staubrückführungsleitung 15 angeordnet.

Beim Betrieb der Vorrichtung wird zunächst der Trichter 3 in die gewünschte Position gefahren. Anschließend wird Schüttgut in den in Richtung des Trichters 3 geneigten Materialeinlauf 24 gegeben. Das Schüttgut fließt aufgrund der Schwerkraft durch den kombinierten Einlauf-/Entstaubungsstutzen (ähnlich 20/14) 18 in das Zufuhrende 23 des ebenfalls in Richtung des Trichters 3 geneigten Förderrohres 5. Es fließt dann weiter durch das Innenrohr 14 und den Rohrstutzen 12 in den Verladetrichter 3. Aus dessen Mündung 16 fließt es dann durch eine an sich bekannte Beladegarnitur in den nicht dargestellten Transportbehälter.

Aus der oberen Öffnung 19 des Entstaubungsstutzens 18 wird Luft abgesaugt, so daß im Förderrohr 5 und im Trichter 3 Unterdruck herrscht. Die beim Beladen im Transportbehälter entstehende Staubluft wird daher über die Staubrückführungsleitung 15, von der ein Ende in den Füllstutzen des Transportbehälters ragt, in den Trichter 3 gesaugt. Dort kann sich der Staub teilweise absetzen und mit dem zugeführten Schüttgut wieder in den Transportbehälter fließen. Die verbleibende Staubluft wird durch den Ringraum 20 zwischen trichterseitigem Ende 7 des Förderrohres 5 und innerem Rohr 14 aus dem Trichter 3 abgesaugt. Sie gelangt durch das Förderrohr 5 im Gegenstrom zu dem zugeführten Schüttgut in den kombinierten Einlauf-/Entstaubungsstutzen (ähnlich 20/14) 18, von wo aus sie geeigneten, nicht dargestellten Filteranlagen zugeführt werden kann.

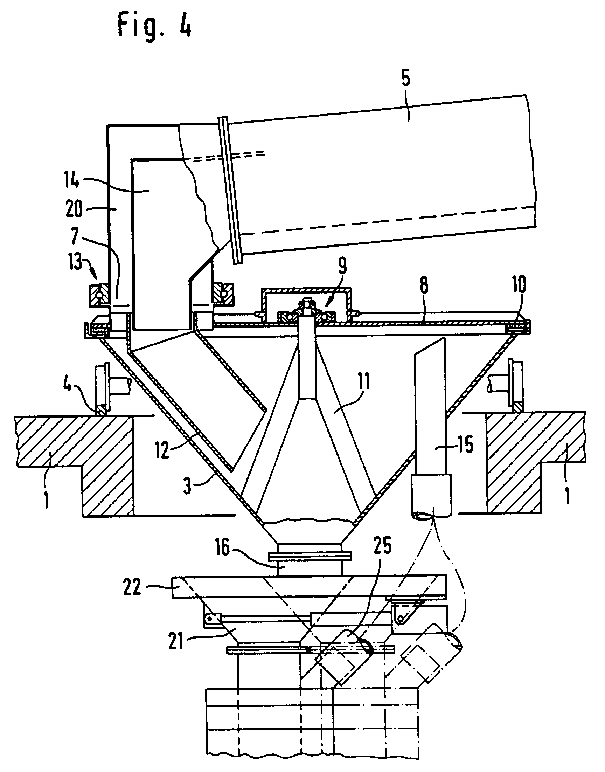

Fig. 4 zeigt eine etwas geänderte Ausführungsform der Vorrichtung. Unterhalb des ersten Verladetrichters 3 ist ein zweiter Verladetrichter 21 angeordnet, der quer zur Verfahrrichtung des ersten Verladetrichters 3 verschiebbar ist. In den beiden Endstellungen des Trichters 21 befindet sich die Mündung 16 des ersten Trichters 3 jeweils am Rand der Einfüllöffnung diese zweiten Trichters 21. Eine Abdeckplatte 22 verhindert hier den Staubaustritt. Die Staubrückführungsleitung 15 weist einen flexiblen Schlauchteil 25 auf, um die Verschiebbarkeit des zweiten Trichters 21 zu ermöglichen.

## Patentansprüche

1. Vorrichtung zum Verladen von Schüttgut von einer stationären Quelle zu einem innerhalb einer vorbestimmten Verfahrstrecke an beliebiger Stelle befindlichen Füllstutzen mit einem längs der Strecke verfahrbaren, an seinem unteren Ende ein Abfüllorgan (16) aufweisenden Verladetrichter (3) und einem das Schüttgut dem Verladetrichter (3) zuführenden Förderrohr (5), das an seinem das Gut von der stationären Quelle aufnehmenden Ende (23) schwenkbar gelagert ist und dessen Auslaßende (7) an den Verladetrichter (3) mündet, wobei der Verladetrichter (3) oben von einem Deckel (8) verschlossen ist, der eine mit dem Auslaßende (7) des Förderrohrs (5) verbundene Öffnung aufweist und gegenüber dem Verladetrichter mindestens in dem Ausmaß der Relativbewegung des Auslaßendes (7) des Förderrohrs (5) gegenüber dem Verladetrichter (3) beweglich ist, dadurch gekennzeichnet, daß der Deckel (8) gegenüber dem Verladetrichter (3) am eine im Trichter stehende, gedachte Achse drehbar ist und seine das Auslaßende (7) des Förderrohrs (5) aufnehmende Öffnung exzentrisch im Deckel (8) angeordnet ist.

2. Vorrichtung nach Anspruch 1, dadurch gekennzeichnet, daß der Deckel (8) sowie der obere Rand des Verladetrichters (3) kreisförmig ausgebildet sind und daß der Deckelrand mit dem Trichterrand dichtend abschließt.

3. Vorrichtung nach Anspruch 1 oder 2, dadurch gekennzeichnet, daß der Verladetrichter rotationssymmetrisch ist und sich in Zufuhrrichtung des Schüttguts konisch verjüngt.

4. Vorrichtung nach einem der Ansprüche 1 - 3, dadurch gekennzeichnet, daß der Deckel (8) auf einem zentrisch am Verladetrichter (3) angeordneten Lager (9) drehbar gelagert ist.

5. Vorrichtung nach einem der Ansprüche 1 bis 4, dadurch gekennzeichnet, daß an dem das Schüttgut aufnehmenden Ende (23) des Förderrohrs (5) ein Entstaubungsstutzen (18) vorgesehen ist.

6. Vorrichtung nach einem der Ansprüche 1 bis 5, dadurch gekennzeichnet, daß eine Staubrückführungsleitung (15) zur Rückführung von Staubluft aus dem zu beladenden Behälter in den Verladetrichter (3) vorgesehen ist, wobei das trichterseitige Ende der Staubrückführungsleitung (15) in einen Bereich (17) des Trichters (3) mündet, der während des Verfahrvorgangs des Trichters (3) nicht vom Auslaßende (7) des Förderrohrs (5) überfahren wird.

7. Vorrichtung nach Anspruch 5 oder 6, dadurch gekennzeichnet, daß das Förderrohr (5) in dem Bereich, in dem es in den Verladetrichter (3) mündet, zusätzlich ein inneres Rohr (14) aufweist, in dem das Schüttgut zugeführt wird, wobei der Ringraum (20) zwischen innerem Rohr (14) und Auslaßende (7) des Förderrohrs (5) für das Abströmen der Staubluft vorgesehen ist.

8. Vorrichtung nach einem der Ansprüche 1 bis 7, dadurch gekennzeichnet, daß unterhalb des Verladetrichters (3) ein zweiter Verladetrichter (21) angeordnet ist, in den der erste Verladetrichter (3) mündet und der quer zur Verfahrrichtung des erste Verladetrichters (3) verschiebbar ist.

9. Vorrichtung nach einem der Ansprüche 1 bis 8, dadurch gekennzeichnet, daß das Förderrohr einen Schneckenförderer bildet.

## Claims

1. Device for loading granulate from a stationary source to a filling socket located at any point within a certain travelling range, the filling socket being equipped with a filling element (16) - movable over the complete travelling range - with a loading hopper (3) at the lower end, and a conveyor pipe (5) for feeding the granulate to the loading hopper (3) with swivelling bearing at the end (23) which is collecting the material from the stationary source and the outlet end (7) opening into the loading hopper (3), with the latter being closed by a cover (8) on the top which is equipped with an opening connected to the outlet end (7) of the conveyor pipe (5) and which can be moved -in relation to the loading hopper - at least to the extent of the relative motion of the outlet end (7) of the conveyor pipe (5) to the loading hopper (3), characterized by the fact that the cover (8) on the loading hopper (3) can be turned around an imagined axle standing in the hopper and that the opening holding the outlet end (7) of the conveyor pipe (5) is arranged eccentrically in the cover (8).

2. Device according to Claim 1, characterized in such a way that the cover (8) as well as the upper edge of the loading hopper (3) are circular and that the cover edge seals off with the hopper edge.

3. Device according to Claim 1 or 2, characterized in such a way that the loading hopper is dynamically balanced and tapers towards the feeding direction of the bulk material.

4. Device according to one of Claims 1 to 3, characterized in such a way that cover (8) is positioned in a swivelling manner on a bearing (9) centrically arranged at the loading hopper (3).

5. Device according to one of Claims 1 to 4, characterized in such a way that a dedusting socket (18) is provided at the end (23) of the conveyor pipe (5) receiving the bulk material.

6. Device according to one of Claims 1 to 5, characterized in such a way that a dust recirculating pipe (15) is provided to return dust air from the vessel to be loaded into the loading hopper (3) with the end on the conical side of the dust recirculating pipe (15) leading to an area (17) of the hopper (3) which is not passed by the outlet end (7) of the conveyor pipe (5) during travelling of the hopper (3).

7. Device according to Claim 5 or 6, characterized in such a way that the conveyor pipe (5) in the area, where it leads into the loading hopper (3), is additionally equipped with an inner pipe (14) for feeding of bulk material and that annulus (20) between the inner pipe (14) and the outlet end (7) of the conveyor pipe (5) serves for dust air escape.

8. Device according to one of Claims 1 to 7, characterized in such a way that a second loading hopper (21) is arranged under loading hopper (3) into which the first loading hopper (3) ends and which can be moved transverse to the travelling direction of the first loading hopper (3).

9. Device according to one of Claims 1 to 8, characterized in such a way that the conveyor pipe forms a screw conveyor.

## Revendications

1. Dispositif pour le chargement de matières en vrac d'une source stationnaire dans une course déterminée vers quelconque tubulure de chargement qui est munie d'un dispositif de remplissage (16) au bout - qui se déplace le long de la course -avec une trémie de chargement (3) et un tuyau de transport (5) qui alimente la matière en vrac vers la trémie de chargement (3) dont le bout (23) qui reçoit la matière de la source stationnaire est pivotant et le bout de sortie (7) débouche dans la trémie de chargement (3) qui est fermé d'en haut à l'aide d'un couvercle (8) muni d'une ouverture connectée avec le bout de sortie (7) du tuyau de transport (5) qui peut être déplacé - par rapport à la trémie de chargement (3) - au moins dans la mesure du mouvement apparent du bout de sortie (7) du tuyau de transport (5) marqué par le fait que le couvercle (8) peut être tourné autour d'un axe imaginé dans la trémie par rapport à la trémie de chargement (3) et l'ouverture du bout de sortie (7) du tuyau de transport (5) est disposée de manière excentrique dans le couvercle (8).

2. Dispositif selon demande 1 marqué par le fait que le couvercle (8) ainsi que le bord supérieur de la trémie de chargement (3) sont conçus de manière circulaire et que le bord du couvercle ferme étanchement avec le bord de la trémie.

3. Dispositif selon demande 1 ou 2 marqué par le fait que la trémie de chargement a une symétrie de révolution et se réduit en cône en direction de l'alimentation des matières en vrac.

4. Dispositif selon l'une des demandes 1 à 3 marqué par le fait que le couvercle (8) est pivotant sur un palier (9) qui est arrangé de manière centrique à la trémie de chargement (3).

5. Dispositif selon l'une des demandes 1 à 4 marqué par le fait qu'une tubulure de dépoussiérage (18) est prévu au bout (23) du tuyau de transport (5) recevant la matière en vrac.

6. Dispositif selon l'une des demandes 1 à 5 marqué par le fait qu'il faut prévoir un tuyau de retour de poussière (15) pour recycler l'air du récipient à charger dans la trémie de chargement (3) avec le bout conique de la conduite de retour de poussière (15) menant dans une zone (17) de la trémie (3) qui ne sera pas dépassée par le bout de sortie (7) du tuyau de transport (5) pendant le processus de déplacement de la trémie (3).

7. Dispositif selon demande 5 ou 6 marqué par le fait que le tuyau de transport (5) est additionellement muni d'un tuyau intérieur (14) pour alimenter la matière en vrac dans la zone oú il mène dans la trémie de chargement (3) et l'espace annulaire (20) qui se trouve entre le tuyau intérieur (14) et le bout de sortie (7) du tuyau de transport (5) prévu pour la sortie de l'air.

8. Dispositif selon l'une des demandes 1 à 7 marqué par le fait qu'une deuxième trémie de chargement (21) est située en dessous de la première trémie de chargement (3) qui débouche dans la deuxième et qui peut être déplacée transversalement de direction de la première trémie de chargement (3).

9. Dispositif selon l'une des demandes 1 à 8 marqué par le fait que le tuyau de transport forme une vis d'alimentation.
